(19) Europäisches Patentamt
European Patent Office
Office européen des brevets

(11) **EP 2 258 510 A1**

(12) **EUROPEAN PATENT APPLICATION**
published in accordance with Art. 153(4) EPC

(43) Date of publication:
**08.12.2010 Bulletin 2010/49**

(51) Int Cl.:
**B23K 26/04** (2006.01)    **B23K 26/06** (2006.01)
**B23K 26/08** (2006.01)    **G02B 26/10** (2006.01)

(21) Application number: **09715937.0**

(22) Date of filing: **19.02.2009**

(86) International application number:
**PCT/JP2009/052874**

(87) International publication number:
**WO 2009/107538 (03.09.2009 Gazette 2009/36)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **29.02.2008 JP 2008051359**

(71) Applicant: **Toyota Jidosha Kabushiki Kaisha
Toyota-shi, Aichi 471-8571 (JP)**

(72) Inventors:
• **KOMIYA, Tomoki
Kasugai-shi
Aichi 486-0901 (JP)**

• **HISANO, Hirohiko
Toyota-shi
Aichi 471-8571 (JP)**
• **SATO, Akio
Toyota-shi
Aichi 471-8571 (JP)**
• **OKUNO, Tomoya
Toyota-shi
Aichi 471-8571 (JP)**

(74) Representative: **Smith, Samuel Leonard
J.A. Kemp & Co.
14 South Square
Gray's Inn
London WC1R 5JJ (GB)**

(54) **LASER PROCESSING DEVICE AND LASER PROCESSING METHOD**

(57)     A laser processing apparatus 11 comprises a first shift mechanism 31 including a first transparent member 41 having a first incident face 43 and a first output face 44 that are parallel to each other; and a first motor 42 that rotates the first transparent member 41 around a first rotational axis; wherein the first shift mechanism 31 shifts the laser beam L exiting from the first output face 44 in a state parallel with the incident light on the first incident face 43 in a first direction. The laser processing apparatus 11 also comprises a second shift mechanism 32 including a second transparent member 46 including a second incident face 48 and a second output face 49 that are parallel to each other; and a second motor 47 that rotates the second transparent member 46 around the second rotational axis; wherein the second rotating mechanism 32 rotates the laser beam L exiting from the second output face 49 in a state parallel with the laser beam L incident on the second incident face 48 in a second direction perpendicular to the first direction. A light collecting lens 22 collects the laser beam L shifted with the second shift section 32 to process a work W1. This configuration allows control of a taper angle of a hole formed by laser processing.

**Fig.1A**

**(Cont. next page)**

# Fig.1B

## Description

TECHNICAL FIELD

This invention relates to a laser processing apparatus and a laser processing method where a laser beam is used to irradiate on an object to process the object (e.g., for drilling or cutting thereof).

BACKGROUND ART

There has been an apparatus for processing with a laser source in which a laser beam emitted from the laser source is collected by a light collector to irradiate the collected laser beam onto an object for drilling the object. As a laser processing apparatus of this kind, an apparatus that conducts "trepanning" is known. This apparatus scans the laser beam, or a spot light such that the laser beam collected on a work piece tracks a certain path (e.g., a circular trajectory) to cut out part of the work piece. For example, Japanese Laid-Open Patent Publication 2006-272384 discloses a laser processing apparatus in which a wedge plate disposed between a laser source and a collecting lens inclines an optical axis of a laser beam with respect to an optical axis of the collecting lens, and the wedge plate rotates around the optical axis of the collecting lens, to scan the laser beam along a circular shape for trepanning.

An inner peripheral surface of a hole that is processed is inclined in a tapered way with respect to the optical axis of the laser beam, depending on the radiation angle of the laser beam with respect to the object. In the Japanese Laid-Open Patent Publication 2006-272384, the radiation angle of the laser beam with respect to the object is determined by an angle of the wedge plate or a focal length of the collecting lens, and the taper angle of the formed hole is also determined. Thus, to control the taper angle of the hole is difficult.

DISCLOSURE OF THE INVENTION

Accordingly, it is an objective of the present invention to provide a laser processing apparatus and a laser processing method in which the taper angle of a hole formed by laser processing can be controlled.
In one aspect, a laser processing apparatus is provided. The laser processing apparatus comprises: a laser source for emitting a laser beam; a first shift section including: a first transparent member including a first incident face and a first output face that are parallel to each other in which the laser beam, when being emitted, enters the first transparent member by being incident on the first incident face at an incident angle, passes through the first transparent member, and exits from the first output face; and a first rotating mechanism that supports the first transparent member so that the laser beam passes through the first incident face and the first output face, wherein the first rotating mechanism rotates the first transparent member around a first rotational axis to change the incident angle of the laser beam incident on the first incident face; wherein the first shift section shifts the laser beam exiting from the first output face in a state parallel with the laser beam incident on the first incident face in a first direction; a second shift section including: a second transparent member including a second incident face and a second output face that are parallel to each other, wherein the laser beam exiting from the first shift section enters the second incident face by being incident on the second incident face at another incident angle; and a second rotating mechanism that supports the second transparent member so that the laser beam passes through the second incident face with the laser beam exiting from the second output face, wherein the second rotating mechanism rotates the second transparent member around a second rotational axis perpendicular to the first rotational axis to change the another incident angle of the laser beam incident on the second incident face; wherein the second shift section shifts the laser beam exiting from the second output face in a state parallel with the laser beam incident on the second incident face in a second direction perpendicular to the first direction; and a light collector for collecting the laser beam emitted from the second shift section.

According to this configuration, the first transparent member and the second transparent member are rotated to shift the laser beam incident on the first incident face (laser beam) to exit from the first output face in the first direction, and to shift the laser beam incident on the second incident face to exit from the second output face in the second direction perpendicular to the first direction. Thus, the laser beam is shifted both in the first direction and in the second direction whereby an incident position of the laser beam at the light collector is changed. A refraction angle of the laser beam varies depending on the incident position at the light collector (e.g., in the case of a collecting lens, depending on distance from its optical axis). This allows change in a radiation angle of the laser beam with respect to an object to be processed, and a taper angle of a hole formed in the object can be changed. Thus, by rotating the first and second transparent members, the taper angle of the hole can be controlled. Since each of the first shift section and second shift section shifts the output light to exit parallel to the incident light, the focal point does not change while the taper angle is changed. Only the taper angle is controlled while the focal point remains unchanged.

In one embodiment, the laser processing apparatus further comprises a laser shaping device disposed between the laser source and the first shift section on a light path of the laser beam, wherein the laser shaping device reflects or refracts the entire laser beam to shape the laser beam into a generally circular shape around the optical axis of the laser beam.

According to this configuration, the laser beam in a circular shape is focused at one point with use of the light collector to process the object, which prevents the laser beam from entering the center of the light collector. Thus, the effect of spherical aberration at the light collector is reduced. Thus, focal depth can be shortened to prevent the laser beam from focusing on the backside of a work piece. For example, even when an object which should not be processed is disposed on the backside of the work piece, such an object is not damaged. In addition, since all the laser beams from the laser source are reflected or refracted to shape the laser beam in a circular form at the center of the optical axis, the amount of light from the laser beam is maintained and efficient use of the laser beam is achieved.

In another embodiment, the laser processing apparatus may further comprise a first galvano mirror and a second galvano mirror both disposed either at the position between the laser shaping device and the first shift section on the light path of the laser beam or at the position between the second shift section and the light collector on the light path of the laser beam to reflect the laser beam to change the direction of the laser beam and each galvano mirror including an axis; and a galvano drive mechanism for rotating the first galvano mirror and the second galvano mirror around their axes, wherein the axis of the first galvano mirror and the axis of the second galvano mirror are perpendicular to each other.

According to this configuration, the laser beam can be scanned such that the laser beam as focused on the object tracks a certain trajectory to conduct trepanning for cutting out the object. Thus, a drilling process in which the object is drilled in a greater diameter than a spot diameter of the focused laser beam can be carried out. Synchronization of the direction of the laser beam with the shifting direction of the first and second shift sections enables control of the taper angle of a hole formed by trepanning.

In another embodiment, the laser shaping device includes a first Axicon lens and a second Axicon lens that are arranged so that conical portions of the two lenses face or oppose each other.

According to this configuration, the laser beam can be shaped in a circular form while maintaining its light amount.

In another embodiment, the laser processing apparatus may further comprise a distant controller for controlling a distance between the first Axicon lens and the second Axicon lens.

According to this configuration, the distant controller controls the diameter of a circular laser beam that varies depending on the distance between the first and the second conical lenses. As a result, a focal depth that varies depending on the diameter of circular laser beam entering the light collector can be controlled. This allows processing at an appropriate focal depth depending on the thickness of an object.

In another embodiment, the laser processing apparatus may further comprise a beam radius varying device for varying beam radius of the laser beam emitted from the laser source.

According to this configuration, provision of the beam radius varying device for varying beam radius of the laser beam emitted from the laser source can vary power of the light beam at the focal point of the collecting lens.

In another embodiment a method for laser processing is provided. The method comprises emitting a laser beam from a laser source and passing the laser beam through a first transparent member, including a first incident face and a first output face that are parallel to each other by directing the laser beam to be incident on the first incident face with the laser beam exiting from the first output face in a state parallel with the laser beam incident on the first incident face and shifted in a first direction; passing the laser beam through a second transparent member, including a second incident face and a second output face that are parallel to each other, by directing the laser beam exiting from the first output face to be incident on the second incident face with the laser beam exiting from the second output face in a state parallel with laser beam incident on the second incident face and shifted in a second direction perpendicular to the first direction; and collecting the laser beam shifted in the second direction at a light collector to process an object.

According to this configuration, a taper angle of a hole formed in the object can be controlled, and only the taper angle is controlled while the focal point remains unchanged.

In one embodiment, said emitting a laser beam from a laser source and passing the laser beam through a first transparent member includes: rotating the first transparent member so that the laser beam incident on the first incident face is inclined with respect to the first incident face; and passing the laser beam emitted from the laser source through the rotated first transparent member, wherein the laser beam includes an optical axis and said first direction is generally perpendicular to the optical axis of the laser beam emitted from the laser source; wherein said passing the laser beam through a second transparent member includes: rotating the second transparent member so that the laser beam incident on the second incident face is inclined with respect to the second incident face; and passing the laser beam emitted from the laser source through the rotated second transparent member, wherein the second direction is generally perpendicular to the optical axis and the first direction.

According to this configuration, rotation of the first and the second transparent members allows control of the taper angle of the hole formed in the object, and only the taper angle is controlled while the focal point remains unchanged.

BRIEF DESCRIPTION OF THE DRAWINGS

    Fig. 1A is a schematic view of configuration of a laser processing apparatus;
    Fig. 1B is an enlarged view of a focus point indicated by the encircled portion 1B of Fig. 1A;
Fig. 2A is a perspective view of a trepanning unit;
Fig. 2B is a bottom view viewed in the direction of the first rotational axis of Fig. 2A;
Fig. 2C is a side view viewed in the direction of the second rotational axis of Fig. 2A;
Fig. 3A is a schematic view illustrating an optical path of a laser beam in which an optical axis of the laser beam has not been shifted with respect to an optical axis of the collecting lens;
Fig. 3B is a cross-sectional schematic view illustrating a shape of a hole of Fig. 3A;
Fig. 4A is a schematic view illustrating an optical path of the laser beam in which the optical axis of the laser beam was shifted with respect to the optical axis of the collecting lens; and
Fig. 4B is a cross-sectional schematic view illustrating a shape of a hole of Fig. 4A.

BEST MODE FOR CARRYING OUT THE INVENTION

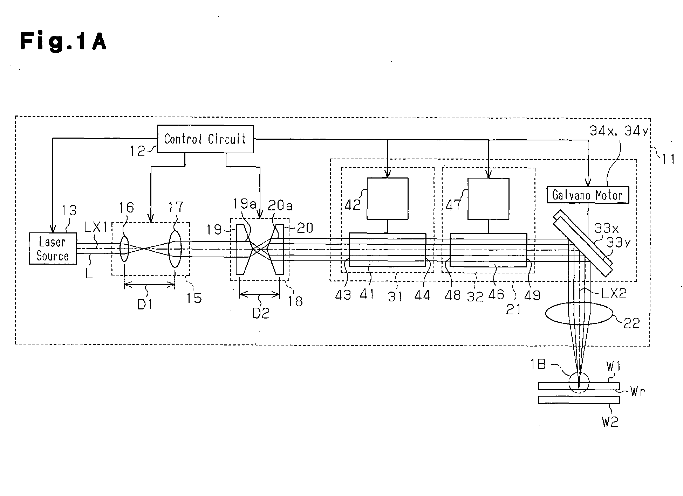

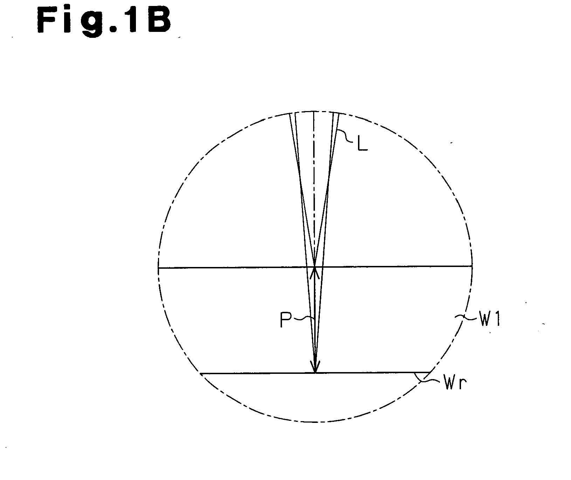

An embodiment of the present invention will be described with reference to the drawings.
A laser processing apparatus 11 according to the invention as illustrated in Fig. 1 performs so-called trepanning. Specifically, a laser beam is radiated on an object to be processed, i.e., on a work piece W1 based on the control of a control circuit 12 to drill the work piece W1, or the laser beam is scanned so that the laser beam as radiated on the work W1 draws a predetermined trajectory to cut out the work piece W1.

The laser processing apparatus 11 includes a laser source 13 that emits a laser beam L for processing, and oscillation of the laser source 13 is controlled by the control circuit 12. Subsequent to the laser source 13 on an optical path of the laser beam L, a beam expander 15 is provided. The beam expander 15 serves as a beam diameter changing device that changes a beam diameter of the laser beam L. In this embodiment, the beam expander 15 is a so-called Kepler-type expander having a pair of convex lenses 16 and 17 the centers of which are arranged on the optical axis LX1 of the laser beam L. The beam expander 15 emits the parallel laser beam L from the latter convex lens 17. The distance D1 between the convex lenses 16 and 17 is variable, and varied based on the control of the control circuit 12. The beam expander 15 emits the laser beam L having a beam diameter determined that depends on the distance D1 between the lenses 16 and 17.

Subsequent to the beam expander 15, a lens unit 18 is disposed. The lens unit 18 serves as a laser shaping device that shapes the incoming laser beam L into a circle (i.e., a circularly annular form) having a center at the optical axis LX1. In this embodiment, the lens unit 18 includes first and second Axicon lenses 19, 20. The first and second Axicon lenses 19, 20 are generally circular truncated cones, and their apex angles are equal. In this embodiment, the first and second Axicon lenses 19, 20 have the same shape. Circular cone portions 19a and 20a face each other and are arranged in a manner that the optical axes thereof correspond to the optical axis LX1 of the laser beam L. The distance D2 between the first Axicon lens 19 and the second Axicon lens 20 is variable. The distance D2 between the first and second Axicon lenses 19, 20 is controlled by the control circuit 12 that serves as a distant controller.

The first conical lens 19 refracts the laser beams L incident on the plane of the first conical lens 19 and shapes the laser beams L into a circle shape for emission. Then, the second conical lens 20 shapes the circular laser beam L, which was shaped into a circular form with use of the first conical lens 19 and incident on the conical portion 20a, into a circular laser beam L parallel to the optical axis LX1 and emits the laser beam L from the plane of the second conical lens 20. In this manner, the lens unit 18 refracts all the laser beam rays L without blocking and shapes them to form a circle(s). Thus, one or more circular laser beams L can be obtained while maintaining the light amount of the laser beam L.

Subsequent to the lens unit 18, a trepanning unit 21 is disposed. Subsequent to the trepanning unit 21, a collecting lens 22 is disposed. For example, the collecting lens 22 is a convex lens. The trepanning unit 21 shifts the above laser beam(s) L emitted in parallel with the incident laser beam L in a direction generally perpendicular to the optical axis LX1 of the laser beam L, and scans the laser beam(s) L two-dimensionally on the work piece W1.

As illustrated in an enlarged view of Fig. 1B, the collecting lens 22 that serves as a light collector converges the circular laser beam L on a focus area P. This allows processing of the work piece W1 in the focus area P of the collecting lens 22. As used herein, the term converge refers to focusing the light beam in a manner that the shape or cross-section of the laser beam perpendicular to the optical axis in the focus area P becomes a point rather than a circle. Due to the effect from spherical aberration, the collecting lens 22 collects the beam passing nearer the center of the lens 22 farther the lens 22. In this embodiment, since a circular laser beam L is collected, the collected laser beam rays L are spaced at generally equal distances from the collecting lens 22. That is, the focal depth can be made shorter. This prevents the laser beam L from collecting at the backside Wr of the work piece W1. Thus, even if a non-processable object W2 is placed at the backside Wr of the work piece W1, the non-processable object W2 is not damaged.

Next, configuration of the trepanning unit 21 will be described. The trepanning unit 21 includes a first shift mechanism 31 and a second shift mechanism 32. The first shift mechanism 31 shifts the output laser beam L exiting in parallel with the incident laser beam L in a first direction generally perpendicular to the optical axis LX1. The second shift mechanism 32 shifts the output laser beam L exiting in parallel with the incident laser beam L in a second direction generally perpendicular to the optical axis LX1 and the first direction. The trepanning unit 21 also includes first and second galvano mirrors 33x, 33y that reflect the laser beam L to change the direction of the laser beam L, and first and second galvano motors 34x, 34y that serve as galvano drive devices for rotating the first and second galvano mirrors 33x, 33y around their axes that are generally perpendicular to each other. In this embodiment, in a state where the laser beam L has not been shifted by the first and second shift mechanisms 31, 32, and the laser beam L has not been scanned with the first and second galvano mirrors 33x, 33y, the optical axis LX1 of the laser beam L matches the optical axis LX2 of the collecting lens 22.

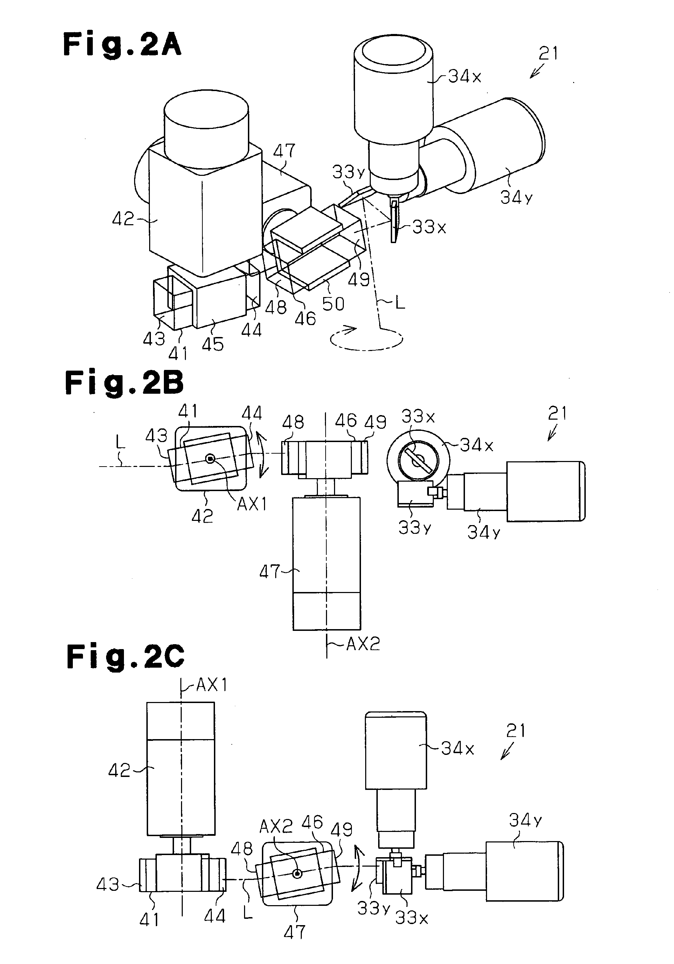

As illustrated in Fig. 2A, the first shift mechanism 31 serving as a first shift section includes a first transparent member 41 made of a quartz prism and a first motor 42 for rotating the first transparent member 41. For an illustrative purpose, in Figs. 2A to 2C, a circular laser beam L is shown in a dashed-dotted line. The first transparent member 41 has a first incident face 43 and a first output face 44 that are parallel to each other. The first motor 42 is fixed to a non-illustrated main body of the laser processing apparatus 11, and supports the first transparent member 41 with a supporting member 45 having a channel-like cross-section so that the laser beam L passes through the first incident face 43 and the first output face 44. Thus, in this embodiment, the first motor 42 and the supporting member 45 configure a first rotating mechanism. The control circuit 12 drives the first motor 42 to rotate the first transparent member 41 around the first rotation axis AX1 that extends parallel with the first incident face 43 and the first output face 44 to change an incident angle of the laser beam L incident on the first incident face 43.

The second shift mechanism 32 serving as a second shift section includes a second transparent member 46 made of a quartz prism and a second motor 47 for rotating the second transparent member 46. The second transparent member 46 has a second incident face 48 and a second output face 49 that are parallel to each other. The second motor 47 is fixed to the main body of the laser processing apparatus 11, and supports the second transparent member 46 with a supporting member 50 having a channel-like cross-section so that the laser beam L passes through the second incident face 48 and the second output face 49 subsequent to the first transparent member 41. Thus, in this embodiment, the second motor 47 and the supporting member 50 configure a second rotating mechanism. The control circuit 12 drives the second motor 47 to rotate the second transparent member 46 around the second rotational axis AX2 that is generally perpendicular to the first rotational axis AX1 and parallel with the second incident face 48 and the second output face 49.

As illustrated in Fig. 2B, when the first motor 42 rotates the first transparent member 41 to cause the laser beam L incident on the first incident face 43 to incline with respect to the first incident face 43, the output light parallel with the incident light is shifted in a first direction (i.e., the vertical direction in Fig. 2B) generally perpendicular to the optical axis LX1, and exits the first output face 44. In particular, when the laser beam L enter the first transparent member 41, the laser beam L is refracted at the first incident face 43 based on the difference between a refractive rate in the air and a refractive rate in the first transparent member 41, and the laser beam L is refracted again at the first output face 44. Since the first incident face 43 and the first output face 44 are parallel, the output light exiting parallel with the incident light is shifted in the first direction by the amount corresponding to a refracted angle in the first transparent member 41 and the axial length of the first transparent member 41.

As illustrated in Fig. 2C, when the second motor 47 rotates the second transparent member 46 to cause the laser beam L incident on the second incident face 48 to incline with respect to the second incident face 48, the output light parallel with the incident light is shifted in a second direction (i.e., the vertical direction in Fig. 2C) generally perpendicular to the optical axis LX1 and the first direction, and exits the second output face 49. Accordingly, by controlling the rotational amount of the first and second transparent members 41, 46, the first and second shift mechanisms 31, 32 shift output lights in parallel with the incident lights. Thus, the laser beam L is shifted two-dimensionally in a direction generally perpendicular to the optical axis LX1 while remaining parallel with the optical axis of the laser beam L.

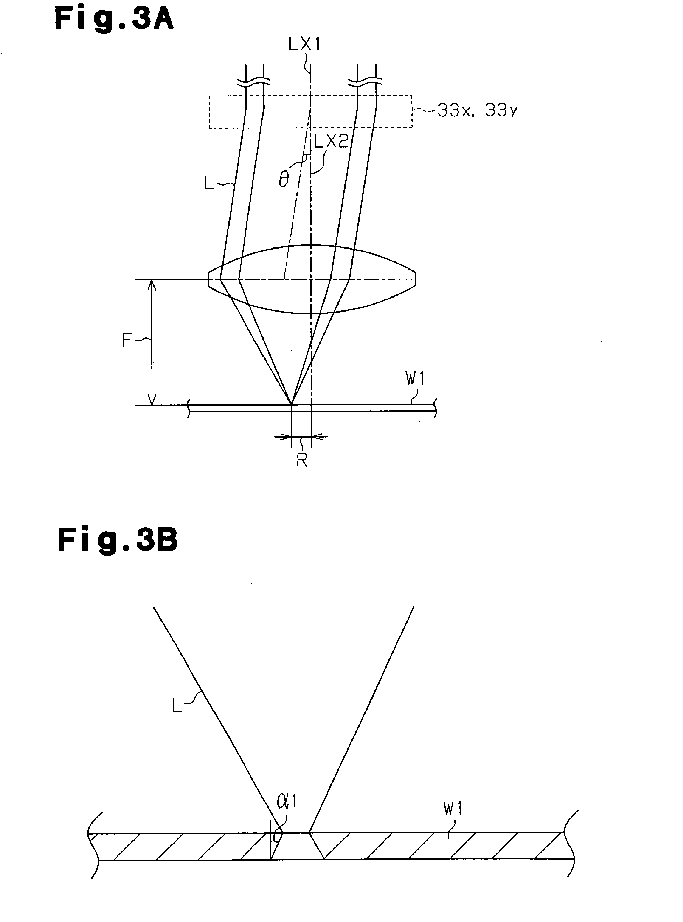

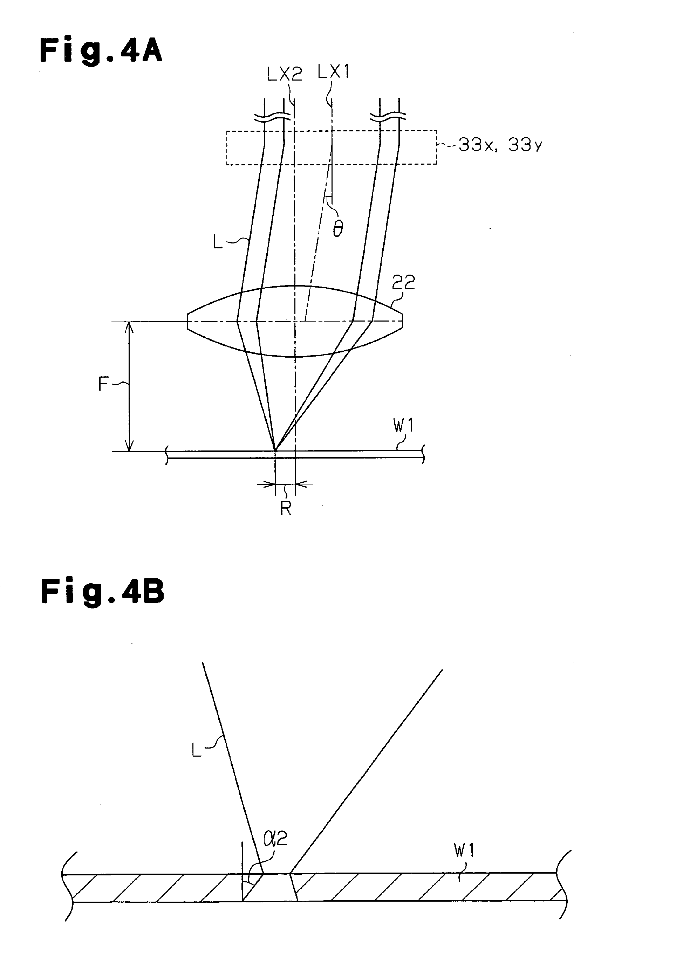

The first and second galvano mirrors 33x, 33y are disposed subsequent to the second shift mechanism 32, i.e., between the second shift mechanism 32 and the collecting lens 22. The first and second galvano motors 34x, 34y are driven under the control of the control circuit 20 to control angles of the first and second galvano mirrors 33x, 33y. The laser beam L transmitted from the first and second shift mechanisms 31, 32 are reflected at the first and second galvano mirrors 33x, 33y to change an incident direction or an incident angle of the laser beam L at the collecting lens 22, thereby changing a focal point of the laser beam in the work piece W1. In particular, when the optical axis LX1 of the laser beam L is inclined by a predetermined angle θ with the first and second galvano mirrors 33x, 33y with respect to the optical axis LX2 of the collecting lens 22, the collecting lens 22 collects the laser beam L on W1 at the position that is distant from the optical axis LX2 by the distance R (see Fig. 3A and Fig. 4A). Specifically, the distance R is expressed by the following equation (1):

$$R = F * \tan\theta \quad (1)$$

wherein F is the focal distance of the collecting lens 22. In this way, the laser processing apparatus 11 performs trepanning by changing the incident direction of the laser beam L with respect to the collecting lens 22 to allow scanning of the laser beam L to track a desired trajectory (e.g., a circular trajectory) on the work piece W1.

Next, taper angle control of a hole formed by the laser processing apparatus 11 will be described. First, the situation where the optical axis LX1 of the laser beam L has not been shifted with respect to the optical axis LX2 of the collecting lens 22, i.e., the situation where the optical axis LX1 and the optical axis LX2 are the same, will be explained. As illustrated in Fig. 3A, when the optical axis LX1 of the laser beam L is inclined by a predetermined angle θ at the galvano mirrors 33x, 33y with respect to the optical axis LX2 of the collecting lens 22, the laser beam L is focused on the work piece W1 at the position distant from the optical axis LX2 by the distance R with the collecting lens 22. At such a position on the work piece W1 distant from the optical axis LX2 by the distance R, the laser beam L is radiated onto the work piece W1 at a radiation angle as illustrated in Fig. 3B. Then, a hole is formed at a taper angle α1 corresponding to the radiation angle.

Meanwhile, as illustrated in Fig. 4B, when the optical axis LX1 of the laser beam L is inclined by the same predetermined angle θ with respect to the optical axis LX2 of the collecting lens 22 but the optical axis LX1 of the laser beam L is shifted, the laser beam L is collected on the work piece W1 at the position a distance from the optical axis LX2 by the distance R as described above. However, different from the above situation in Fig. 3A, since the optical axis LX1 of the laser beam L is shifted in parallel, only the incident location of the laser beam L on the collecting lens 22 is changed. At the collecting lens 22, the refractive angle of the laser beam L differs depending on the distance from the optical axis LX2 of the collecting lens 22. Thus, the radiation angle of the laser beam L incident on the work piece W1, especially the radiation angle of the outer periphery of the laser beam L incident on the work piece W1 is changed depending on the incident position of the laser beam L at the collecting lens 22. Specifically, the laser beam L is radiated at an angle as illustrated in Fig. 4B, and a hole is formed at a taper angle α2 in the work piece W1.

Thus, by shifting the optical axis LX1 of the laser beam L from the optical axis LX2 of the collecting lens 22, the taper angle of the hole can be controlled without changing the focal point of the laser beam L on the work piece W1.

Moreover, in this embodiment, the work piece W1 is cut out by scanning the laser beam L to track a predetermined trajectory on the work piece W1 with use of the first and second galvano mirrors 33x, 33y. Thus, a larger hole whose diameter is greater than the spot diameter of the laser beam L can be formed in the work piece W1. By shifting the laser beam L while scanning the laser beam L on the work piece W1, the taper angle of the hole cut out by trepanning can be controlled. In this regard, each of the first and second shift mechanisms 31, 32 shifts output light in parallel with the incident light, and the focal point remains unchanged even if the taper angle is changed. Thus, the taper angle can be controlled independent of the position of the focal point.

The embodiment as described above has the following advantages.

The laser processing apparatus 11 includes a first shift mechanism 31 having a first transparent member 41 and a first motor 42 for rotating the first transparent member 41 around a first rotational axis AX1. The first transparent member 41 includes a first incident face 43 and a first output face 44 that are parallel to each other. The first shift section 31 shifts the laser beam L exiting from the first output face 44 in a state parallel with the laser beam L incident on the first incident face 43 in a first direction. The laser processing apparatus 11 also includes a second shift mechanism 32 having a second transparent member 46 and a second motor 47 for rotating the second transparent member 46 around the second rotational axis AX2. The second transparent member 46 includes a second incident face 48 and a second output face 49 that are parallel to each other. The second shift section shifts the laser beam L exiting from the second output face 49 in a state parallel with the laser beam incident on the second incident face 48 in a second direction perpendicular to the first direction. The laser beam L shifted by the second shift mechanism 32 is collected by a collecting lens 22 to process a work piece W1. By shifting the laser beam in the first and second directions, the incident position of the laser beam 22 at the collecting lens 22 can be varied. Accordingly, the taper angle of a hole formed by rotating the first and second transparent members 41, 46 can be controlled. For example, in the case where the optical axis of the laser beam is inclined with respect to the optical axis of the collecting lens with use of galvano mirrors, the focal point as well as the taper angle of the hole is changed. In this regard, however, this embodiment enables each of the first and second shift mechanisms 31, 32 to shift the output light in a manner parallel with the incident light. Thus, the change in the taper angle is independent of the position of the focal point. That is, only the taper angle is controlled while the focal point remains unchanged.

Rotation of the first and second transparent members 41, 46 allows the beam laser L to shift to change the taper angle. Reduction in working efficiency is prevented compared with the case where the taper angle of the hole is changed by tilting a collecting lens or a wedge plate provided in the laser processing apparatus or with the case where the taper angle of the hole is changed by exchanging collecting lenses or wedge plates. In addition, the number of parts does not increase depending on the types of taper angles to be processed. Thus, an increase in costs is prevented.

In addition, it may be possible to use an image rotator for rotating the collecting lens 22 around the optical axis LX2 to scan the shifted laser beam L on the collecting lens 22. However, in this case, the image rotator must be held in position by an element such as a hollow shaft, and the image rotator has to be rotated by a driving device disposed in a direction crossing the optical axis LX2. This makes the shifting configuration complicated. However, according to this embodiment, the first and second transparent members 41, 46 are not rotated around the optical axis LX2 of the collecting lens 22. Accordingly, the shifted laser beam L can be scanned on the collecting lens 22 with a simple configuration.

The lens unit 18 is provided for refracting all the beams L between the beam expander 15 and the first shift mechanism 31 to shape the laser beams L into a circle having a center on the optical axis LX1 of the laser beam L. There is spherical aberration at the collecting lens 22, which is, for example, a spherical lens. Therefore, it is possible that the laser beam L collects at the backside Wr of the work piece W1 causes damage to the non-processable object W2. According to this embodiment, a circular laser beam L is collected at the spot on the collecting lens 22 to process the work piece W1. This prevents the laser beam L from going to the center of the collecting lens 22, and the effect of spherical aberration at the collecting lens 22 is reduced. Thus, the focal depth can be reduced to prevent the laser beam L from focusing on the backside Wr of the work piece W1. For example, even when the non-processable object W2 is disposed on the backside Wr of the work piece W1, damage to such an object W2 can be prevented. In addition, since all the laser beams L from the laser source 13 are refracted to shape the laser beam L into a circular form at the center of the optical axis L1, the light amount of the laser beams L is maintained and efficient use of the laser beam L is achieved.

The first and second galvano mirrors 33x, 33y disposed between the second shift mechanism 32 and the collecting lens 22, and the first and second galvano motors 34x, 34y for rotating the first and second galvano mirrors 33x, 33y around their axes that are perpendicular to each other, are provided. Thus, a drilling process in which the object is drilled in a greater diameter than the spot diameter of the focused laser beam can be carried out.

Synchronization of the direction of the laser beam L with the shifting direction of the first and second shift mechanisms 31, 32 enables control of the taper angle of a hole formed by trepanning. In this regard, since the first and second shift mechanisms 31, 32 shift the output light rays in a manner parallel with the incident light, the focal point remains unchanged even if the taper angle is changed. Thus, the taper angle can be controlled independent of the position of the focal point.

The above embodiment may be embodied as follows.

Instead of the convex collecting lens 22 as a light collector, the light collector may be another lens such as an fθ lens. In addition, the light collector may be a paraboloidal mirror that collects the laser beam L.

Instead of placing the work piece W1 at the focal area p of the collecting lens 22, the work piece W1 may be placed in front of the focal area p of the collecting lens. This allows processing a hole having a greater radius on the front surface of the work piece W1 than on the back surface. That is, the hole is tapered in the opposite direction from the above embodiment.

In the above embodiment, the optical axis LX1 of the laser beam L is the same as the optical axis LX2 of the collecting lens 22 in a state in which the laser beam L has not been shifted with use of the first and second shift mechanisms 31, 32 and has not been scanned with use of the first and second galvano mirrors 33x, 33y. However, the optical axis LX1 of the laser beam L and the optical axis LX2 of the collecting lens 22 may be different.

The lens unit 18 may be omitted from the laser processing apparatus 11, and the laser beam L may not be shaped into a circle.

The first and second transparent members 41, 46 are not limited to quartz prisms but may be any member as long as it has a different refractive rate from its surroundings and it allows passage of the laser beam therethrough.

Instead of arranging the first and second Axicon lenses 19, 20 in a manner that the cone portions 19a and 20a face each other, the cone portions 19a and 20a may be directed in opposite directions. This configuration also allows circular shaping of the laser beam L while maintaining the light amount.

Other than a circular truncated cone, the first and second Axicon lenses 19, 20 may be in the form of a cone, a truncated pyramid, or a pyramid. The first and second Axicon lenses 19, 20 are not limited to those having the same size and the same shape, but may have different size. The apex angles of the cone portions 19a and 20a may be different.

Instead of making the distance D2 of the first and second Axicon lenses 19, 20 variable, the lens unit 18 may be configured in a manner that the distance D2 is fixed.

The beam expander 15 is not limited to a Kepler-type where a pair of convex lenses 16 and 17 are coupled, but may be a Galileo-type where a concave lens and a convex lens are coupled. In addition, lenses forming the beam expander 15 is not limited to two lenses (a pair) but also may be more than two lenses.

Instead of making the distance D1 of the convex lenses 16 and 17 variable, the beam expander 15 may be configured in a manner that the distance D1 is fixed.

In the above embodiment, the first and second Axicon lenses 19, 20 constitute the laser shaping device. However, another element may reflect the laser beam into a circular shape. For example, a first reflective portion in the form of a cone and a second reflective portion in the form of a tapered tube may reflect the laser beam into a circular shape, where the end or an apex of the first reflective portion is located on the incident side and the first reflective portion is located on the optical axis LX1 while the diameter of the second reflective portion is enlarged toward the output side and the second reflective portion reflects the laser beam reflected at the first reflective portion on an inner peripheral surface of the second reflective portion perpendicularly in a direction parallel to the optical axis of the laser beam. In this case, the diameter of a circular laser beam may be varied by setting one of the first reflective portion and the second reflective portion movable in the direction of the optical axis LX1, and actually moving it.

The laser beam may be also reflected into a circular shape with a prism using internal reflection. Since one prism constitutes the first and second reflective portions, this configuration reduces the quantity of parts required for the laser shaping device. Further, in the lens unit 18, a spherical lens may be provided instead of the second conical lens 20.

The position of the first and second galvano mirrors 33x, 33y are not limited to the position between the second shift mechanism 32 and the collecting lens 22, and may be the position between the lens unit 18 and the first shift mechanism 31.

Other than trepanning, processing such as drilling and cutting may be performed.

**Claims**

1. A laser processing apparatus comprising:

   a laser source for emitting a laser beam;
   a first shift section including:

   a first transparent member including a first incident face and a first output face that are parallel to each other, in which the laser beam, when being emitted, enters the first transparent member by being incident on the first incident face at an incident angle, passes through the first transparent member, and exits from the first output face; and
   a first rotating mechanism that supports the first transparent member so that the laser beam passes through the first incident face and the first output face, wherein the first rotating mechanism rotates the first transparent member around a first rotational axis to change the incident angle of the laser beam incident on the first incident face;
   wherein the first shift section shifts the laser beam exiting from the first output face in a state parallel with the laser beam incident on the first incident face in a first direction;

   a second shift section including:

   a second transparent member including a second incident face and a second output face that are parallel to each other, wherein the laser beam exiting from the first shift section enters the second incident face by being incident on the second incident face at another incident angle; and
   a second rotating mechanism that supports the second transparent member so that the laser beam passes through the second incident face with the laser beam exiting from the second output face, wherein the second rotating mechanism rotates the second transparent member around a second rotational axis perpendicular to the first rotational axis to change the another incident angle of the laser beam incident on the second incident face;
   wherein the second shift section shifts the laser beam exiting from the second output face in a state parallel with the laser beam incident on the second incident face in a second direction perpendicular to the first direction; and

   a light collector for collecting the laser beam emitted from the second shift section.

2. The laser processing apparatus of claim 1, further comprising a laser shaping device disposed between the laser source and the first shift section on a light path of the laser beam, wherein the laser shaping device reflects or refracts the entire laser beam to shape the laser beam into a generally circular shape around the optical axis of the laser beam.

3. The laser processing apparatus of claim 2, further comprising:

   a first galvano mirror and a second galvano mirror both disposed either at the position between the laser shaping device and the first shift section on the light path of the laser beam or at the position between the second shift section and the light collector on the light path of the laser beam to reflect the laser beam to change the direction of the laser beam and each galvano mirror including an axis; and
   a galvano drive mechanism for rotating the first galvano mirror and the second galvano mirror around their axes, wherein the axis of the first galvano mirror and the axis of the second galvano mirror are perpendicular to each other.

4. The laser processing apparatus of claim 2 wherein the laser shaping device includes a first Axicon lens and a second Axicon lens that are arranged so that conical portions of the two lenses face each other or oppose each other.

5. The laser processing apparatus of claim 4 further comprising a distant controller for controlling a distance between the first Axicon lens and the second Axicon lens.

6. The laser processing apparatus of any one of the claims 2-5 further comprising a beam radius varying device for varying a beam radius of the laser beam emitted from the laser source.

7. A method for laser processing comprising:

emitting a laser beam from a laser source and passing the laser beam through a first transparent member, including a first incident face and a first output face that are parallel to each other by directing the laser beam to be incident on the first incident face with the laser beam exiting from the first output face in a state parallel with the laser beam incident on the first incident face and shifted in a first direction;
passing the laser beam through a second transparent member, including a second incident face and a second output face that are parallel to each other, by directing the laser beam exiting from the first output face to be incident on the second incident face with the laser beam exiting from the second output face in a state parallel with laser beam incident on the second incident face and shifted in a second direction perpendicular to the first direction; and
collecting the laser beam shifted in the second direction at a light collector to process an object.

8. The method of claim 7 wherein said emitting a laser beam from a laser source and passing the laser beam through a first transparent member includes:

rotating the first transparent member so that the laser beam incident on the first incident face is inclined with respect to the first incident face; and
passing the laser beam emitted from the laser source through the rotated first transparent member, wherein the laser beam includes an optical axis and said first direction is generally perpendicular to the optical axis of the laser beam emitted from the laser source;
wherein said passing the laser beam through a second transparent member includes:

rotating the second transparent member so that the laser beam incident on the second incident face is inclined with respect to the second incident face; and
passing the laser beam emitted from the laser source through the rotated second transparent member, wherein the second direction is generally perpendicular to the optical axis and the first direction.

# Fig.1A

# Fig.1B

# Fig.2A

# Fig.2B

# Fig.2C

# Fig.3A

# Fig.3B

14

# Fig.4A

# Fig.4B

<table>
<tr><td colspan="2">**INTERNATIONAL SEARCH REPORT**</td><td>International application No.<br>PCT/JP2009/052874</td></tr>
</table>

| | |
|---|---|
| A. CLASSIFICATION OF SUBJECT MATTER<br>*B23K26/04*(2006.01)i, *B23K26/06*(2006.01)i, *B23K26/08*(2006.01)i, *G02B26/10*<br>(2006.01)i | |

According to International Patent Classification (IPC) or to both national classification and IPC

**B. FIELDS SEARCHED**

Minimum documentation searched (classification system followed by classification symbols)
B23K26/04, B23K26/06, B23K26/08, G02B26/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-156579 A   (Amada Co., Ltd.),<br>15 June, 1999 (15.06.99),<br>Par. Nos. [0065], [0079]; Fig. 1 to 2, 6<br>(Family: none) | 1,7-8<br>2-6 |
| Y | JP 2003-275888 A  (Sumitomo Heavy Industries, Ltd.),<br>30 September, 2003 (30.09.03),<br>Par. Nos. [0009] to [0011]; all drawings<br>(Family: none) | 2-6 |
| Y | JP 2007-253203 A  (Sumitomo Electric Industries, Ltd.),<br>04 October, 2007 (04.10.07),<br>Par. Nos. [0010] to [0012]; Figs. 1 to 2<br>(Family: none) | 3,6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 May, 2009 (13.05.09) | Date of mailing of the international search report<br>26 May, 2009 (26.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/052874

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-048091 A (Matsushita Electric Industrial Co., Ltd.), 18 February, 2003 (18.02.03), Par. No. [0025]; Figs. 1, 3 (Family: none) | 6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006272384 A